Europäisches Patentamt

European Patent Office

Office européen des brevets

(19)

(11) Publication number: **0 376 755**

**A1**

(12) **EUROPEAN PATENT APPLICATION**

(21) Application number: **89313708.3**

(22) Date of filing: **29.12.89**

(51) Int. Cl.⁵: **A01C 15/02, A01C 7/02, A01M 9/00**

(30) Priority: **29.12.88 AR 312886**
**29.12.88 AR 312887**
**18.08.89 AR 314695**
**29.09.89 AR 315065**

(43) Date of publication of application:
**04.07.90 Bulletin 90/27**

(84) Designated Contracting States:
**AT BE CH DE ES FR GB GR IT LI LU NL SE**

(71) Applicant: **Rybner, Enrique**
**Pringles 333**
**Tres Arroyos Buenos Aires(AR)**

(72) Inventor: **Rybner, Enrique**
**Pringles 333**
**Tres Arroyos Buenos Aires(AR)**

(74) Representative: **Prutton, Roger et al**
**MARKS & CLERK Alpha Tower Suffolk Street**
**Queensway**
**Birmingham B1 1TT(GB)**

(54) **Apparatus for distributing particulate material.**

(57) Aa apparatus for distributing particulate material which includes an elongated tubular support (1) for the material (g), said support being provided with discharge nozzles (3) and being suspended from a fixed structure in such a way that the tubular support is reciprocable longitudinally to advance the material and is also angularly movable about its longitudinal axis to modify the angular orientation of the discharge nozzles.

EP 0 376 755 A1

Fig. 5

This particular invention refers to improvements to the means used for causing the advancement of particles of material and aims at providing a new distributor for granular, dusty or similar material (such as grains, fertilizers or other items) that will enable a regulated delivery "in situ" of such particles, in a uniform and speedy manner.

Distributors already exist for fertilizers or other particles which use hoppers/deposits containing the product and delivering it through the discharge nozzles of each hopper/deposit.

These conventional systems present great inconveniences due to the fact of having to allocate a hopper/deposit for each of the planned discharge nozzles, and the difficulties in ensuring an efficient distribution of the product applied to the ground, whether grains, fertilizers, etc.

Equally known are the particle distributors which use a transversal duct or valve, projected laterally from its supporting frame on both flanks with a magnitude as great as possible; the aim being to enable delivery to as great a land surface as possible each time the machine passes through.

However, and as is simple to understand, the advancement of the particles, and consequently, its discharge tends be variable and the material accumulates in those areas closer to the duct, while those further away suffer from a lack of material. Therefore, the discharge produced relating to the position of the nozzles is not uniform and the nozzles further away are those having the lesser amount of material in relation to the rest, causing a lack of material to the extreme areas and wastage, due to excess, on the inner areas.

Another inconvenience observed is the fact that the discharge nozzles are normally calibrated or prepared to service particles with a set size of grain; therefore a distributor set, for example, for sowing grains will not be appropriate for a dust discharge of fertiliser or vice versa. The above limits or at least complicates the use of this distributor, making it at the same time uneconomic.

On the other hand, the same inventor has also developed a platform for the displacement of particles, animated with an alternating movement; in such a way that each of the supported particles according to the principle of the inertia at rest will tend to stay on the same place. Thus when the holder is suddenly raised or lowered (due to the alternating mechanism) the particle will be suspended in the air for an instant and will then have contact again with the platform, after having advanced slightly and so on and so on.

However, bearing in mind that the suspension arms used by the same inventor for the above performances were of a rigid structure, the displacement of the platform - and the corresponding impulsion of the particles - is shown by the oscillation of the said surface that holds the material; but maintaining continuously and in a constant manner the distance between articulations, in a way such that since the upper one is immobile as it is linked to a fixed structure, when changing angularly the position of the arms it causes a rise of the platform in a more or less gradual manner.

The improvements implied in this descriptive report give certain positive solutions to the problems raised, as an example the fact of giving flexibility to the suspension arms, so that when the above mentioned angular displacement of the arm occurs (by advancing the platform) the said arm will flex producing an instant reduction of the rotatory radius. The above produces a greater impulsion effect, causing a greater and more efficient displacement in lesser time. At the same time, after flexion, the said arm is charge as a spring, helping the unit to return to the initial position from where a new impulsion occurs.

To illustrate a more specific aspect of this invention with regard to the flexible suspension of the tubular arm, it has been planned to advance the initial point of movement in the link between the flexible arms of the support platform; taking this into account and since the said initialisation points are separated from the vertical line passing through the anchoring device with the fixed structure, it implies a greater advancing conditioning which accelerates the same and reduces notably the original process times.

In another aspect of the invention, the particle distributor is rotational and is equipped with tubular discharge nozzles, enabling the uniform accumulation of the material along the tubular arm containing the said material. In such a way that when the overturning, by rotation, of the said nozzles and its corresponding fitting out occurs, it causes the uniform discharge of material through all outlets. The nozzles could have lids with discharge outlets of variable sections thus enabling adaptation for the different working conditions as well as different grain sizes.

Consequently, it is easy to imagine the approval this distributor will have when used in practice, independently of the category or type of use; as according to its characteristics it is adequate for installation to any type of machinery or system where there is a need to have uniformly distributed particles of material, whether dust, grain, granule, etc.

For the purposes specified and as herein described, to improve the means for producing an advancement of particle materials, are of the type where the particles (g) of at least one same size are displaced through a supporting surface (1′) equipped with a support (a) that, conforming with (b) discharge nozzles of the same particles (g), includes suspension means (b) linked to a fixed structure (c). Characterised by the support consisting of an extended/long tubular arm (b) of which its suspension means (b) present at least a flexible section (16) of which the discharge nozzles extend to form the tubular outlets (2); the said tubular arm (a) has a rotational capacity around its own longitudinal axis (a'), operating as an angular modifier of the orientation of the tubular discharge outlets (2) with relation to the receiving land.

For greater clarity and understanding of the invention we illustrate it ,purely by way of example, with several figures where it is represented in some of the most preferred design.

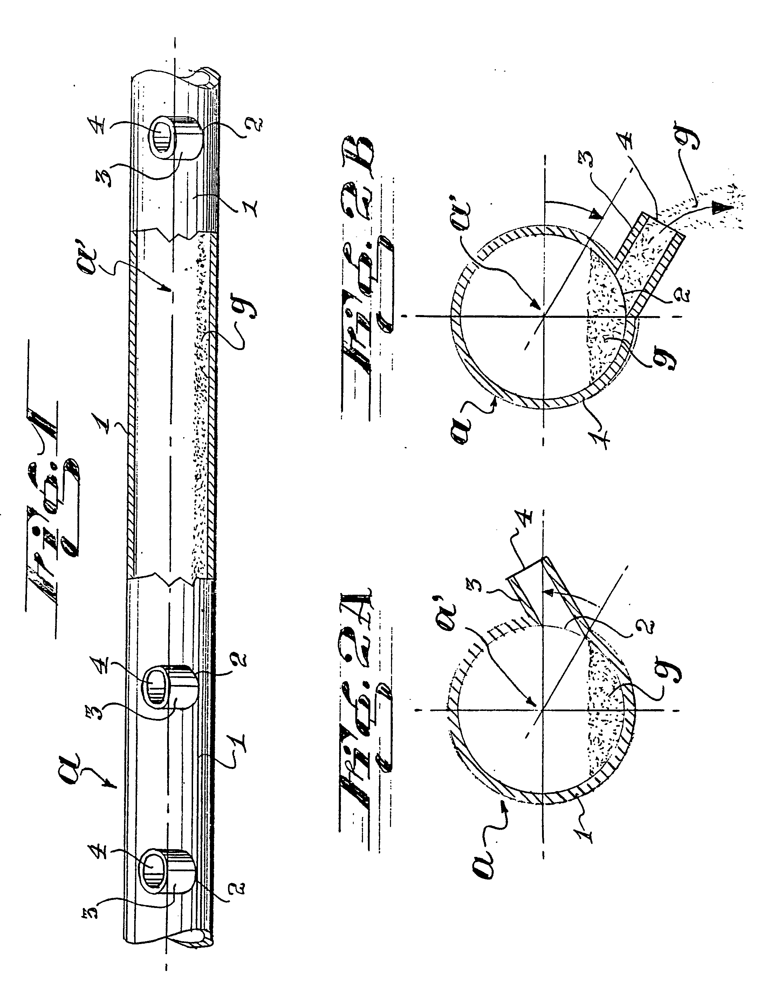

Figure 1, showing a detail of the distributors' valve, enabling appreciation of its general constitution and arrangement of the several sections forming the unit. This figure, by showing a partition longitudinal section, enables the format of the distributor duct with the discharge nozzles extended to form outlets or mouths to be seen; shown from a raised position, allowing the storage of material inside.

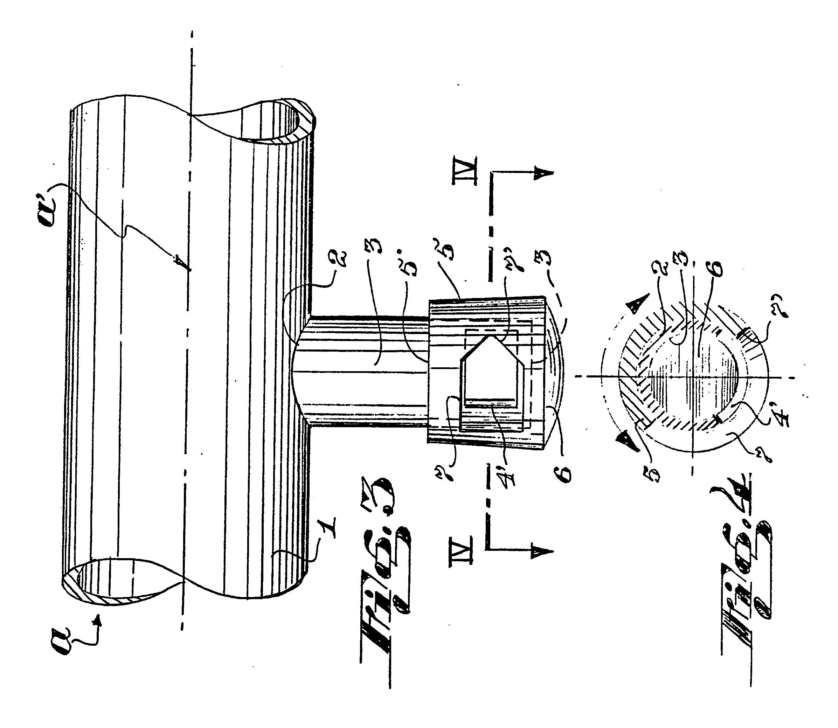

Figure 2-A, transverse section of the valve with its nozzle raised, in such a way that it retains the content of either ducts, granules or particles, until the appropriate moment of discharge.

Figure 2-B, another transverse section of the tubular distributor, with its nozzle tilted downwards, that is, in a discharge position (dust, grains, etc.)

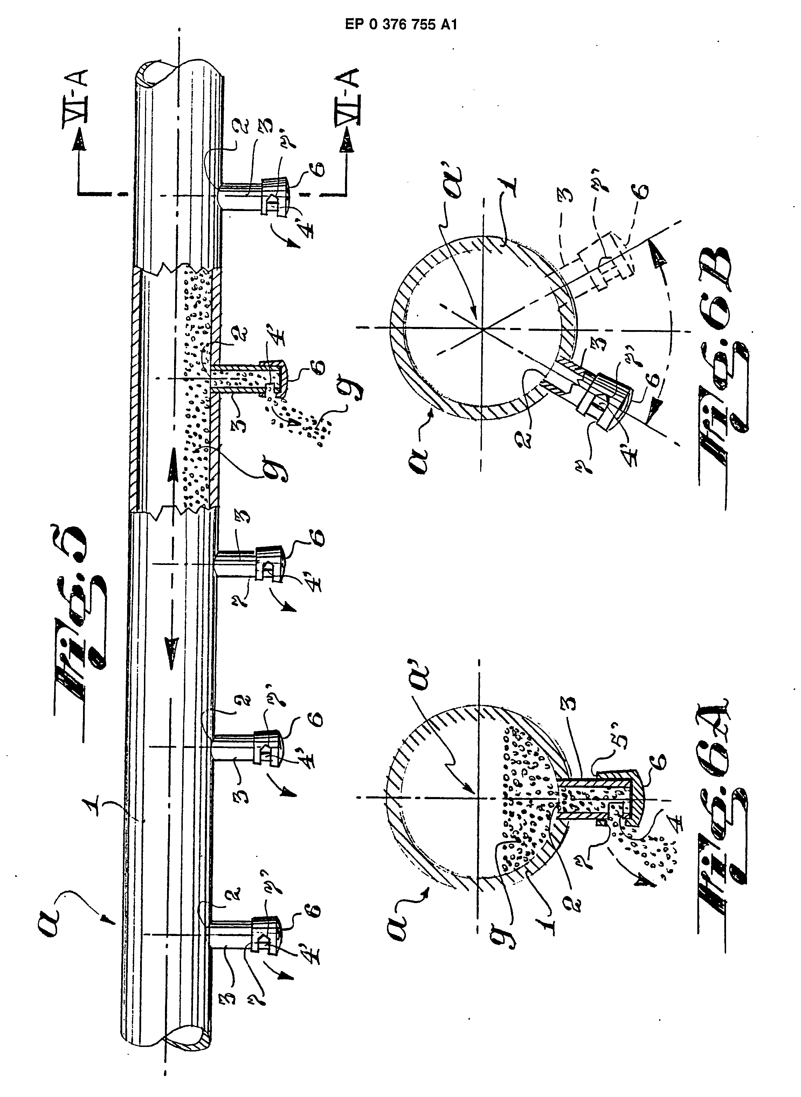

Figure 3, a detail of the device showing a new design where the tubular distributor arm has one of its discharge valves equipped with a terminal lid that rotates angularly enabling the habilitation of the output nozzle or of the laterally extended discharge nozzles concerned, which as seen includes an end piece with a width which can be gradually reduced.

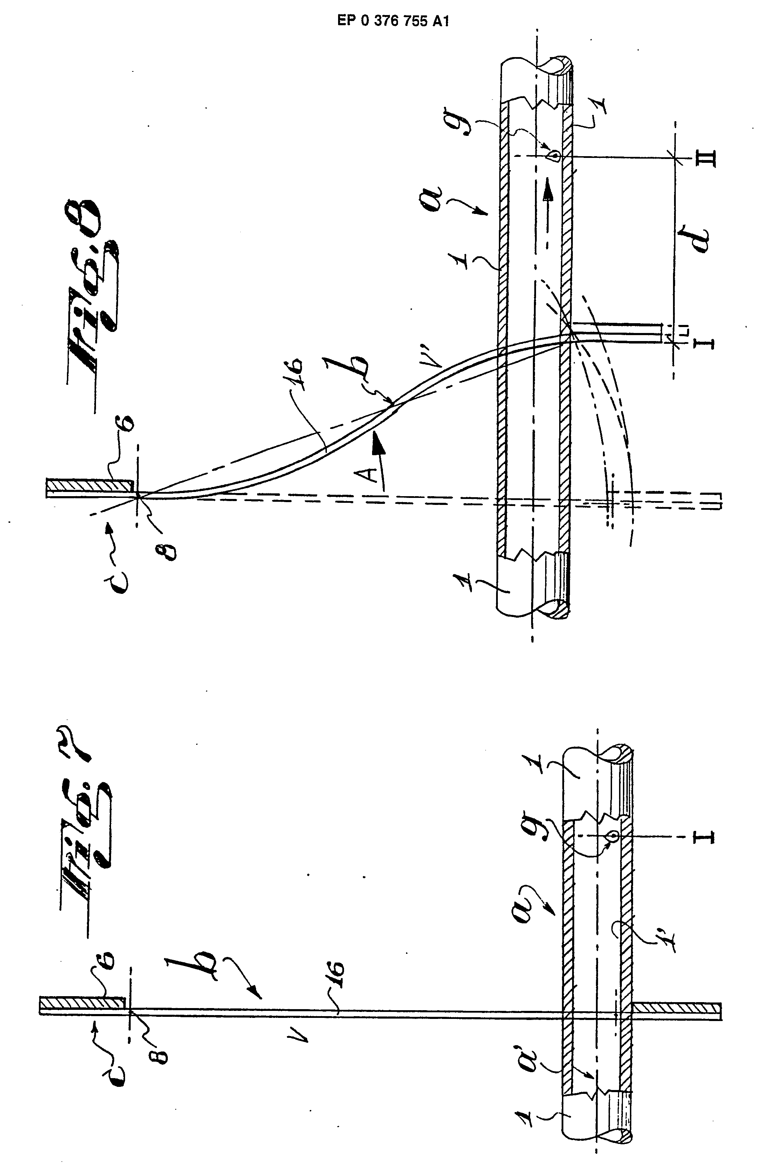

Figure 4, transverse section of the valve or lateral nozzle with its discharge regulatory lid, shown according to the section as Iv-IV in figure 3, giving a clear idea of how the turning of the lid produces a corresponding variation in the opening/closing of the lateral discharge nozzle of the said valve.

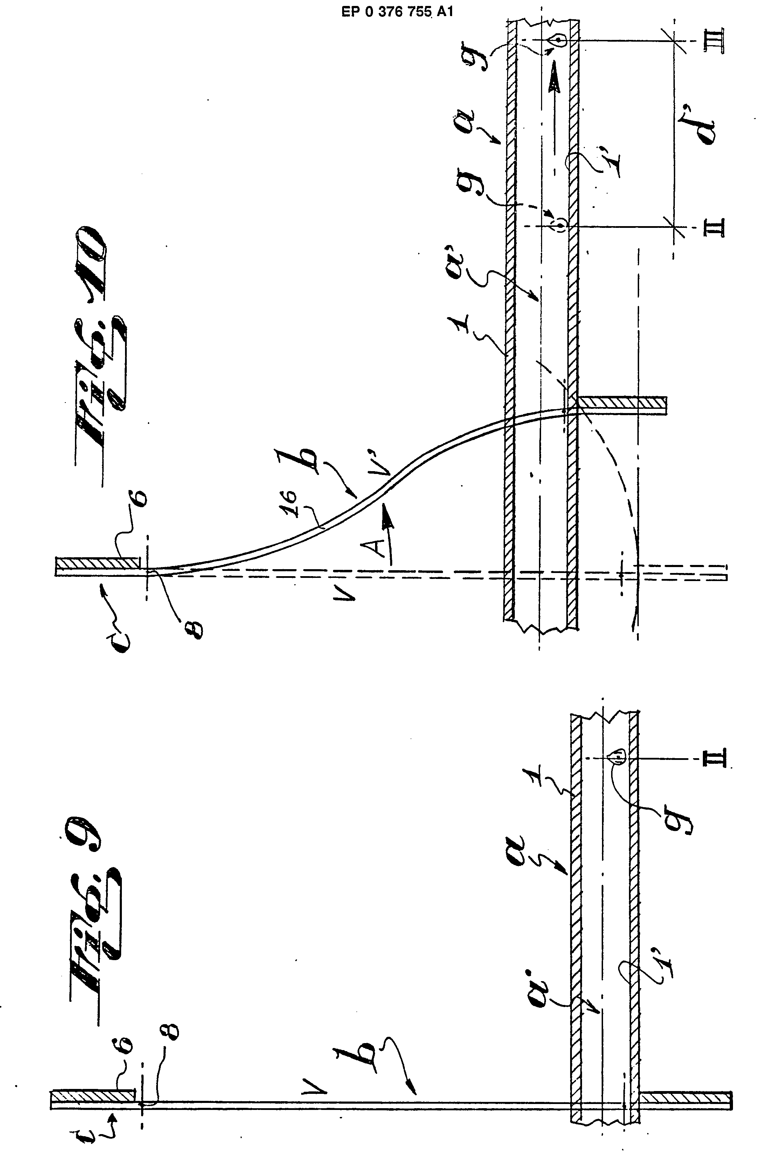

Figure 5, detailed longitudinal view and partial section of the tubular arm and its discharge valves, showing the way in which the material advances, due to the alternating movement of the said arm, according to the arrows and the way in which the discharge occurs.

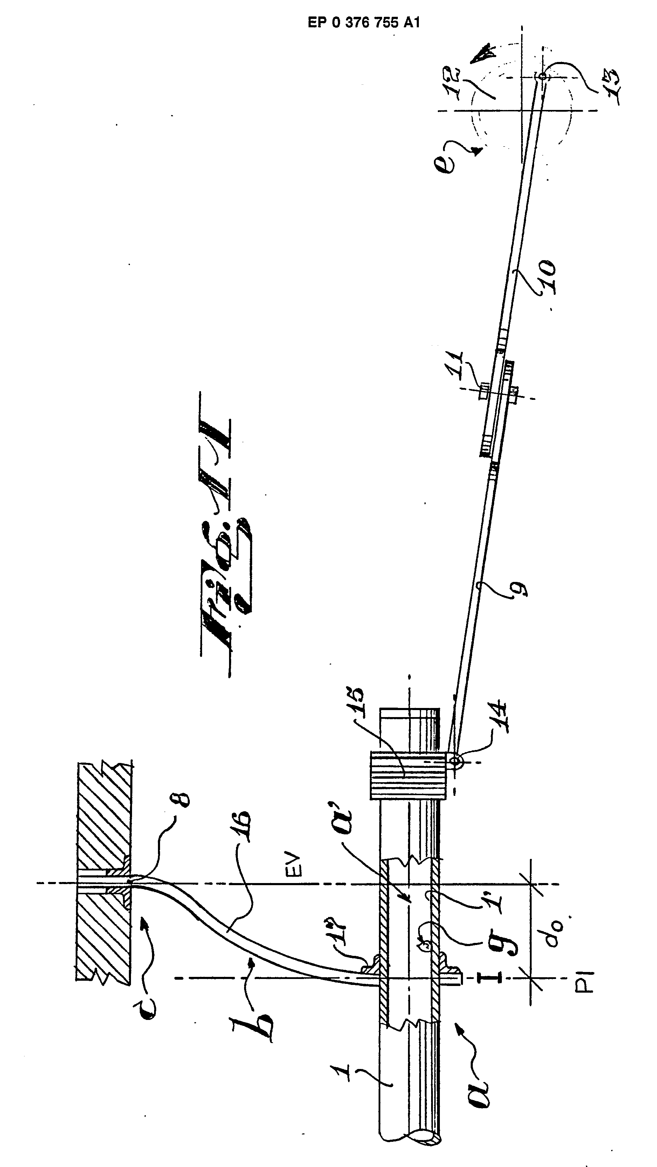

Figure 6-A, transverse section of the tubular arm, according to the section mentioned as VI-A/VI-A under Figure 5 above, showing one of the discharge valves or nozzles, orientated for normal discharge towards the receiving land.

Figure 6-B, another transverse section of the same section as Figure 6-A -partially showing the discharge valve- but illustrating the rotation capacity of the tubular arm in relation to its own longitudinal axis, for changing the angular arrangement of the discharge valve with regard to the receiving land.

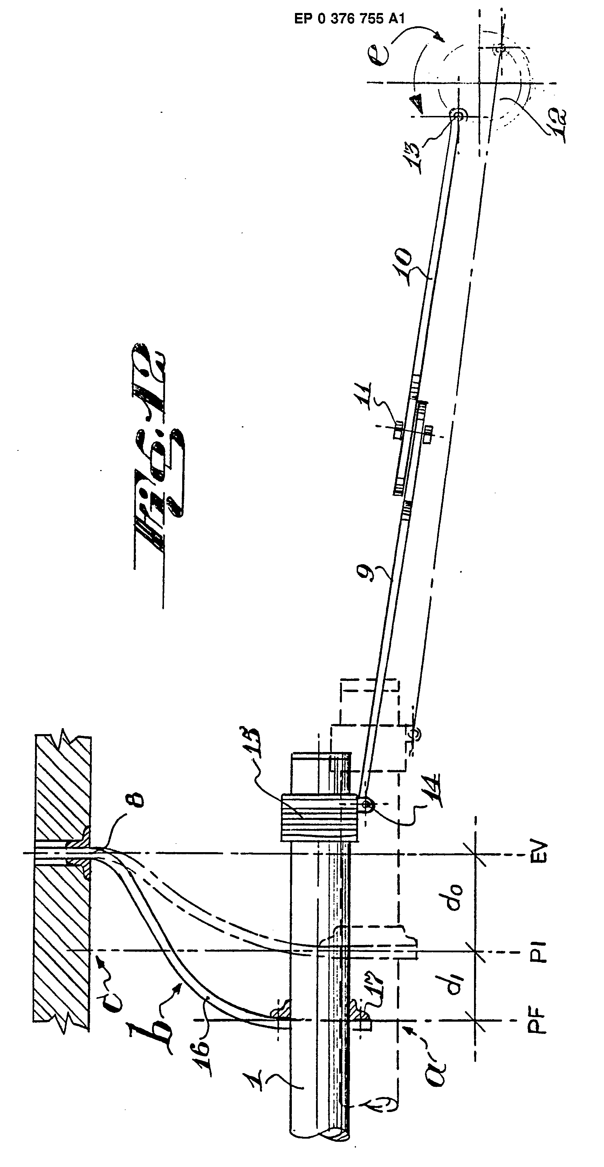

Figure 7, scheme showing the platform which forms the support structure (for example, the one formed by the bottom or lower portion of the walls of the horizontal valve) on the said surface it is possible to observe (greatly enlarged) the presence of a particle of any kind, placed in the initial position I, and laterally it shows one of the flexible suspension arms which form a new design of the device. This shows a layout which coincides with the virtual vertical axis of the structure, in the initial position.

Figure 8, another schematic view complementing figure 7, showing how when the valve moves in accordance with the support surface of the material at a certain magnitude taken from the initial position it causes the flexion of the suspension arm and, consequently, the reduction of the virtual suspension axis therefore producing a faster displacement of the particles.

Figure 9, a complementary schematic view, corresponding to the stage following figure 8, showing the support surface once again in the initial position and the given particle in position II reached when landing on the corresponding surface

Figure 10, another schematic view of the invention, shows a new advancement impulse and a fast rise of the particle in question, by the displacement of the articulated supporting structure in the flexible arms provoking a new impulse to the said particle until reaching position I which corresponds to a new advancement.

Figure 11, another schematic view of the device, is a design variation of the flexible arm as illustrated in figures 7 to 10, where the said device is shown with the flexible arm "forward" in relation to the position of the initial point which originally will pass by the virtual vertical axis. This figure corresponds to the non-working position of the same device, and finally;

Figure 12, another schematic view of the device according to the design of figure 11, connected to the alternating operating system, but after it has performed a step or maximum advancement.

In all of the figures the same numbers apply to similar o corresponding sections; and the letters indicate a set of several elements.

These references correspond to the details given below, where:

(a) support for the particles (tubular arms)
(b) flexible arm
(c) fixed structure for suspension

(d) advancement distance of (a) between positions I and II (d') advancement distance of (a) between positions II and III (e) alternating operating mechanism

(g) particles of material to be distributed

(A) displacement angle of (b) between (V) and (V')

(V) virtual axis of the initial position of (b)

(V') limit of the maximum rotational angle of (b)

(I) first or initial position of the given particle (g)

(II) second position of the particle (g) impelled

(III) third position of the particle (g) impelled

(1) side walls of (a)

(1') support surface of (g) on (a)

(2) passage of the nozzles (3) in (1)

(2') link between arms (b) with (1)

(3) discharge valves or nozzles

(4) discharge output in (2) or (6)

(5) cavity of (6)

(6) variable stoppage lid

(7) lateral discharge passage of (6)

(7') V type end for reduced discharge in (7)

(8) Anchoring end of (b) with (c)

(9) movement translation bar in (e)

(10) connecting rod

(11) connecting bolt of (9) and (10)

(12) engine

(13) connecting rod button

(14) articulation of (a) with (e)

(15) end of (a)

(16) flexible section of arm

(17) connecting part of 1 with 16

In general terms, the device used for producing the advancement of the particles comprises a platform or surface for supporting the said particles (g); surface (1') which could consist of a support (b), consisting of a tubular arm with side walls (1), arranged in a horizontal manner (figures 1 and 5). This material in particles (g), as mentioned, could be solid finely divided into particles as dust, granules, grains, etc.

In order to simplify the drawings figures 9 and 12 show -an enlarged size- of the particle of the material concerned (g); showing how it undergoes successive impulsions according to the invention.

The valve (1) forms a mobile structure, suspended from a fixed structure (c) using arms (b), it is connected to conventionally operated devices (e) as shown in figures 11 and 12 -for information purposes and not limitative. According to the figures, at the ends (15) of the valve (1), this is articulated at (14) with a movement translation bar (9) that, using a bolt (11) is linked to a connecting rod (10) with a connecting rod button (13) which operates in the motorised wheel (12) thus giving to the valve an alternating movement. It also has means that, at a given time will allow the angular displacement of the valve (a) over its own longitudinal axis (a'), figures 2-A, 2-B, 4, 6-A and 6-B.

A hopper/deposit (not shown) contains the particles of material (g), in such a way that when the mentioned alternating movement occurs, the particles (g) are displaced uniformly all along the bottom (1'), figures 5, 7 to 12.

In general, the device operates in the following manner: since the valve (a) moves alternatively, suspended from the elements or flexible arms (b) it produces the advancement of the material (g), and finishes by this material discharging in a uniformly manner through all the discharge nozzles (2).

More specifically, the bottom (1') of (a), its walls (1) are affected by the discharge nozzles (2) that, aligned at equidistant points from the same virtual line of the said walls (1), are extended externally using discharge valves or nozzles (3); these valves or nozzles have the same length and are projected downwards and their edges limit the open ends (4)

The resting working position of the discharge nozzles (3) is shown in figures 1 and 2-A where the nozzles are in a raise position, showing the axis of the said nozzles (3) orientated in such a way that the position of their outlets (4) is higher than the maximum level of product (g) to be distributed.

However, in the discharge position shown in figure 2-B, the nozzles (3) are projected downwards by simply tilting its axis to form an acute angle; so that even within this small angle, their outlets (4) are orientated towards the land (figure 2-B).

While the distributor valve (a) is charged with the material (g) from the feeder concerned (not shown), the nozzles (3) remain in the upright position shown in figures 1 and 2. Under these circumstances, as can be observed, the material (g) accumulates all along (a), figure 1.

When the discharge occurs (figure 2-B) by means of rotating (a) around its longitudinal axis (a'), the material (g) exits directly through the nozzles by the effect of gravity; thus producing a uniform discharge through all the nozzles (3).

Afterwards, by turning around (a) in the same direction or in the direction against the habilitation, the nozzles (3) are raised again as per figures 1 and 2-A, repeating this process for accumulating uniformly the material (g) at each outlet (2) so as to repeat the process described.

The way figures 3 to 6-B have been designed, the discharge valves or nozzles (3) limited with their edges the open ends (4) -as well as in figures 1 to 2-B, near this end, each valve is affected by openings such as perforations fretworks or lateral outlets (7) of a rectangular shape (figures 4 and 5).

Very tightly wedged over the ends of (3), each nozzle has a variable stoppage lid (6), formed by a cap with a side opening or side passage (7) also rectangular, and its width and length is at least equivalent to the discharge openings (4) of the nozzles (3); this rectangular passage (7) of the lids (6) terminates in an end that gradually reduces its width according to the "V" (7) type configuration, figure 3.

So that the relative coincidence between the openings (4) or the nozzles (3) with the openings (7-7') of the lids concerned (6), the latter could be rotationally regulated to modify the discharge flow of (g) or to adapt the device for the size of grain concerned.

Therefore a relative stoppage between the walls (6) is achieved in this manner with regard to the openings (7-7') and from the minimum opening given by the portion (7') at "V" of (7), as the lid (6) is rotated -figure 4-so the section for each discharge increases, whilst if it is operated in the opposite direction it decreases.

Also, and taking into account that the tubular arm (a) not only has the capacity for alternating longitudinal displacements but for rotating around its own axis (a'), the angular position of the valves could be modified downwards, either in a normal position as shown in figure 6-A or acute angle as shown in figure 6-B depending upon the operational or working requirements. .

Regarding the suspension arms (b) of the tubular distributor arm (a) in relation to the upper fixed structure (c); the said arms (b) are connected by articulation at (2') to the valve (1) and at (8) to the fixed structure (c).

Each arm (b) has at least a portion (16) consisting of a flexible material such as leather, rubber, rubber and fabric, etc.

With the system integrated in this manner, and for the purpose of interpreting its operation, it is assumed that the particle (g) considered -when connecting point (2') is aligned with (1) by the axis (V) which meets the vertical -is located at the initial position shown as (I)

By using the impulsion means and the rotating centres at (1), the axis (V) is displaced with a forward and ascending movement until reaching the maximum angle (A), with the limit at (V') see figure 2, at the point (2') it advances by the effect of having an original fixed magnitude between (1) and (2) -now (1) and (2')- causes an instant elevation of the supporting surface at (3), propelling the particle of material (4) forward as shown by the arrow, with an advancement magnitude until the position point (II), separated from (I) with a distance (d), figure 2.

This effect increases notably since the arm (5), made of flexible material, as shown in figure 8, when the valve (1) moves, the limit (V') has a length that, due to the flexion adopted by (16) is suddenly reduced producing a sudden elevation of the platform (1') and consequently at the same time producing a greater forward impulsion power of (g).

At this moment, the first stage of the semi-extension of the centre is completed at (8) when the particle (g) due to the inertia remains in the air for an instant to then return to (1') which is when the platform or tubular arm (a) retrocedes until it reaches the initial point with the vertical axis (V) without overcoming it (figure 9). This defines the new advancement position at II.

Afterwards, the said platform (a) operates with a new forward and ascending movement in the same direction (figure 10) following the same steps as applied to figure 8, the axis (V) will display, from the vertical, a new angle (A) equal to the previous one, with a limit at (V'), and with a position where the support surface (1') suddenly raises again, helped by the flexion of (16), it again pushes the particle (g) forward, from position (II) to position (III), with a new advancement distance shown as (d') which is the magnitude already travelled by (d).

The process is repeated in the same way to cause the advancement of each particle (g) to the preset position which could either be a discharge nozzle (2) or similar.

It is important to note that the speed of the forward and ascending movement must be of such a magnitude that shall break the inertia of the material in the support surface.

That is, the displacement speed could be referred to a mechanism that produces a determined number of movements per time unit. The greater the number of movements per time unit the greater the displacement speed of the support surface.

A parameter to be taken into account for determining the speed is the distance of the path of the support surface (1') from the initial alignment with the vertical (V) to the furthest away point (2') of the desired advancement and bearing in mind the flexion coefficient of the material used for manufacturing the arms (16). Needless to say, that all the above shall be determined furthermore by the weight of the material to be displaced.

Furthermore, the system can work efficiently with the support surface (1') not only horizontally but also slightly tilted either to the positive or negative side of the gradient with relation to the displacement direction of the particles (g) on the surface.

Another design of the flexible arms (b) illustrated in figures 11 and 12, the virtual axis (EV) marked in figure 1, which passes through the anchoring (8) of the arm (16) on the above mentioned design, coincides with the initial point of movement; while this second design by previously deforming the arm (16) produces an advancement of this initial point (PI) which therefore coincides with the connection, but which is away from the virtual axis (EV) by a magnitude of $(D_0) + (D_1)$, figure 12; in such a way that due to this advancement, and to the extension of the connecting rod (9-10) the rotation of the engine (12) of the device (e) causes the alternating movement of (a), figures 11 and 12 and accelerates the advancement of the particles (g).

There is no doubt that when this invention is taken into practice several modifications could be introduced regarding certain constructional and form details without detracting from the fundamental principles that are clearly substantiated in the claims mentioned below.

## Claims

1. IMPROVEMENTS TO THE MEANS USED TO PRODUCE THE ADVANCEMENT OF PARTICLES OF MATERIAL; where the particles of at least the same size are displaced through a support surface having discharge nozzles for the particles, included suspension means linked to a fixed structure; characterised in that the support comprises an elongate tubular arm, the suspension means include at least one flexible section and the discharge nozzles are in the form of tubular nozzles, said tubular arm being angularly movable around its own longitudinal axis so as to act as a modifier of the angular orientation of the tubular discharge nozzles with regard to the receiving land.

2 IMPROVEMENTS TO THE MEANS USED TO PRODUCE THE ADVANCEMENT OF PARTICLES OF MATERIAL; in accordance with claim 1, the tubular discharge nozzles being normally projected aligned and equidistant along one virtual longitudinal line that is arrange on the periphery of the tubular arm.

3 IMPROVEMENTS TO THE MEANS USED TO PRODUCE THE ADVANCEMENT OF PARTICLES OF MATERIAL; in accordance with claim I, the discharge nozzles being provided externally with valves ending in an enlarged side outlet that includes a variable stoppage lid for the said outlet.

4 IMPROVEMENTS TO THE MEANS USED TO PRODUCE THE ADVANCEMENT OF PARTICLES OF MATERIAL; in accordance with claim 3, wherein the variable outlet lid of each valve is a cap tightly wedged onto the end of the said valve, rotating in relation to the same, on the area where it coincides with the side discharge outlet, is affected by an enlarged passage

5 IMPROVEMENTS TO THE MEANS USED TO PRODUCE THE ADVANCEMENT OF PARTICLES OF MATERIAL; in accordance with claim 3, wherein the side enlarged passage of the lid is basically rectangular and has on its origin an opening "V" of a gradually variable width from an area next to the vertex of the said "V".

6 IMPROVEMENTS TO THE MEANS USED TO PRODUCE THE ADVANCEMENT OF PARTICLES OF MATERIAL; in accordance with claim 3, wherein the side outlet is formed by a plurality of orifices of different diameters

7 IMPROVEMENTS TO THE MEANS USED TO PRODUCE THE ADVANCEMENT OF PARTICLES OF MATERIAL; in accordance with claim 1, wherein the discharge nozzles are formed by outlets that externally are projected forming the relevant open tubular nozzles and furthermore aligned amongst themselves all along the tube's walls; the mentioned tube being linked by devices angularly operated according to its longitudinal axis, between two extreme/end positions that correspond to the lower projection and to the elevation of the said nozzles.

8 IMPROVEMENTS TO THE MEANS USED TO PRODUCE THE ADVANCEMENT OF PARTICLES OF MATERIAL; in accordance with claim 1, wherein the tubular arm, is operated by angular movements contained within the acute angle.

9 IMPROVEMENTS TO THE MEANS USED TO PRODUCE THE ADVANCEMENT OF PARTICLES OF MATERIAL; in accordance with claim 1, wherein each arm has a flexible section between its articulation links with the upper fixed structure and with the conforming element of the support surface of the particles respectively.

10 IMPROVEMENTS TO THE MEANS USED TO PRODUCE THE ADVANCEMENT OF PARTICLES OF MATERIAL; in accordance with claim 1, wherein each arm forms a second degree lever, the fulcrum of which is the articulation with the fixed structure, and the power is the link with the conforming element of the support structure of the particles, operated with an alternating movement, whilst the resistance arm of the said lever is equipped with a flexible section of the same.

11 IMPROVEMENTS TO THE MEANS USED TO PRODUCE THE ADVANCEMENT OF PARTICLES OF MATERIAL; in accordance with claim 1, wherein the means that conform with the surface holding the particles is linked to the flexible arm at a position where is away from the virtual axis. The linking point being further from the same virtual axis, with relation to the direction of displacement of the said support means.

12 IMPROVEMENTS TO THE MEANS USED TO PRODUCE THE ADVANCEMENT OF PARTICLES OF MATERIAL; in accordance with claim 1, wherein position zero, initiation of the movement, during the period previous to the same coincides with the linking point between the flexible arm and the supporting surface and is away from the virtual axis that passes through the upper link of the flexible arm, at a forward magnitude with regard to the direction of the movement.

7

Fig. 1

Fig. 2A

Fig. 2B

EP 0 376 755 A1

*a*     *a'*

1

*Fig.3*

2

3

5·

7

5

4'

7'

6

3

IV     IV

5

2

3

6

*Fig.4*

7

4'

7'

EP 0 376 755 A1

Fig. 5

Fig. 6A

Fig. 6B

Fig. 8

Fig. 7

Fig. 9

Fig. 10

EP 0 376 755 A1

*Fig. 11*

EP 0 376 755 A1

*Fig. 12*

EP 0 376 755 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4257534 (WILLIAMS)<br>* column 1, line 66 - column 3, line 11; figures 1-7 * | 1 | A01C15/02<br>A01C7/02<br>A01M9/00 |
| A | | 3, 4, 7, 8 | |
| Y | DE-A-2052013 (LICENTIA-PATENT)<br>* page 3, paragraph 3 - page 6, paragraph 1; figures 1-4 * | 1 | |
| A | | 2, 8, 9, 10 | |
| A | GB-A-327062 (MULLER)<br>* page 1, line 34 - page 2, line 4; figures 1-5 * | 1, 2, 7 | |
| A | FR-A-956603 (GRUBER)<br>* page 2, line 9 - page 5, line 5; figures 1-17 * | 1, 2, 10 | |
| A | DE-C-280934 (HEINICH)<br>* page 1, line 30 - page 2, line 3; figures 1-3 * | 1 | TECHNICAL FIELDS SEARCHED (Int. Cl.5 )<br><br>A01C<br>A01M<br>B65G |

The present search report has been drawn up for all claims

| Place of search | Date of completion of the search | Examiner |
|---|---|---|
| THE HAGUE | 20 APRIL 1990 | VERMANDER R.H. |

EPO FORM 1503 03.82 (P0401)